Europäisches Patentamt

(19) European Patent Office  (11) Veröffentlichungsnummer: **0 250 719**
**B1**
Office européen des brevets

(12) **EUROPÄISCHE PATENTSCHRIFT**

(45) Veröffentlichungstag der Patentschrift: (51) Int. Cl.⁴: **H02M 7/48,** H02M 7/757,
**28.02.90** H02M 7/515

(21) Anmeldenummer: **87104447.5**

(22) Anmeldetag: **25.03.87**

(54) Verfahren zum verlustarmen Betrieb einer Symmetrier- und Bremsstellervorrichtung für Umrichter mit hoher Zwischenkreisspannung.

(30) Priorität: **23.06.86 DE 3620926** (73) Patentinhaber: **Siemens Aktiengesellschaft,**
**Wittelsbacherplatz 2, D-8000 München 2(DE)**

(43) Veröffentlichungstag der Anmeldung:
**07.01.88 Patentblatt 88/1** (72) Erfinder: **Peppel, Michael, Dr., Rote Turmstrasse 16,**
**D-6940 Weinheim (Bergstrasse)(DE)**

(45) Bekanntmachung des Hinweises auf die Patenterteilung:
**28.02.90 Patentblatt 90/9**

(84) Benannte Vertragsstaaten:
**CH DE FR GB LI SE**

(56) Entgegenhaltungen:
**DE-A- 3 430 308**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur verlustarmen Symmetrierung von Teilspannungen an in Reihe angeordneten elektronischen Teilschaltelementen in den Zweigpaaren der Phasen eines Hochspannungsumrichters mit Spannungszwischenkreis und zum Abbau von Überspannungen im Zwischenkreis. Die Teilspannungen werden dabei durch eine der Anzahl der Teilschaltelemente pro Zweig entsprechenden Anzahl von in Reihe angeordneten und den Teilschaltelementen parallel geschalteten Teilkondensatoren aus der Zwischenkreisspannung entnommen.

Bei Umrichtern mit einer hohen Zwischenkreisspannung kann diese größer als die von einem Schaltelement in jedem Zweig eines Zweigpaares der einzelnen Wechselrichterphasen maximal abschaltbare Spannung sein, bzw. größer als die pro Schaltelement maximal zulässige Sperrspannung. So muß in einem solchen Fall jedes Schaltelement praktisch als Reihenschaltung von elektronischen Teilschaltelementen ausgeführt und die hohe Zwischenkreisspannung möglichst gleichmäßig auf diese aufgeteilt werden. Hierzu ist es aus der DE-OS 3 430 308 bekannt, den Zwischenkreiskondensator ebenfalls als Reihenschaltung sogenannter Teilkondensatoren auszuführen, deren Anzahl der Anzahl der pro Zweig eines jeden Zweigpaares hintereinander geschalteten elektronischen Teilschaltelemente entspricht. Die Teilkondensatoren sind, je nach der aktuellen Polarität des Laststromes am Ausgang der jeweiligen Phase und dem Schaltzustand der beiden Zweige, den Teilschaltelementen eines der beiden Zweige parallel geschaltet. Außerdem sind zur statischen Spannungssymmetrierung den Kondensatoren hochohmige Widerstände parallel geschaltet.

Zur Darstellung des Standes der Technik und zur näheren Erläuterung der Erfindung dienen die nachfolgend kurz angeführten Figuren. Dabei zeigt

Figur 1 beispielhaft eine Phase eines bekannten Hochspannungsumrichters mit einer "dynamischen Spannungsaufteilung",

Figur 2 eine Phase eines Umrichters gemäß Figur 1 mit einer zusätzlichen erfindungsgemäßen "Symmetrier- und Bremsstellervorrichtung", und

Figur 3 ein bevorzugtes Ausführungsbeispiel eines Teils einer Betriebsvorrichtung zur Ansteuerung der Symmetrier- und Bremsstellervorrichtung.

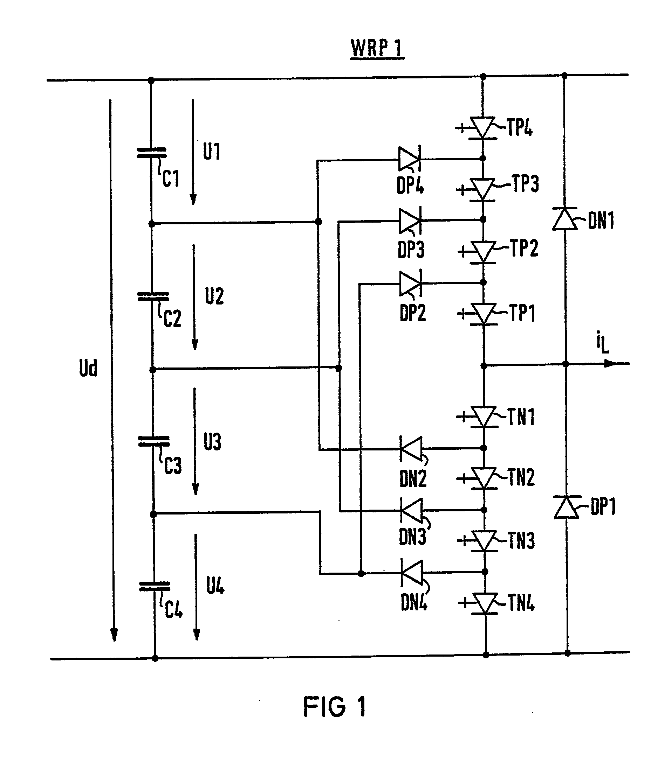

Eine mögliche Ausführungsform einer "dynamischen Spannungsaufteilung" mit in Reihe angeordneten Teilkondensatoren ist in Figur 1 dargestellt. Jeder Zweig der dortigen Wechselrichterphase WRP1 besteht in diesem Fall aus vier abschaltbaren Thyristoren (GTO-Thyristoren) TP1 ... TP4 bzw. TN1 ... TN4 als in Reihe geschaltete elektronische Teilschaltelemente. Dieses Zweigpaar wird durch je vier Dioden DP1 ... DP4 bzw. DN1 ... DN4 zu einer Wechselrichterphase vervollständigt. Dabei dienen die Elemente DN1 und DP1 als "Freilaufdioden" und die Elemente DP2 ... DP4 und DN2 ... DN4 zur Ankopplung an die vier Teilkondensatoren C1 ... C4 abhängig von der aktuellen Polarität des Laststromes $i_L$ und dem Schaltzustand der abschaltbaren Thyristoren pro Zweig. Die hohe Zwischenkreisspannung Ud wird auf diese Weise in die Teilspannungen U1 ... U4 aufgeteilt. Der Übersichtlichkeit halber sind keinerlei Beschaltungen der elektronischen Bauelemente, insbesondere keine Ein- und Ausschaltentlastungen für die GTO-Thyristoren dargestellt.

In der Praxis ist eine Schaltung gemäß Figur 1 selbst mit geeigneten Beschaltungsmaßnahmen der einzelnen elektronischen Bauelemente in der Regel nicht betriebsfähig. Selbst bei synchroner Zündung bzw. Sperrung aller in Reihe liegenden Teilschaltelemente eines Zweiges wird sich dennoch eine ungleichmäßige Spannungsaufteilung an den Teilkondensatoren nicht vermeiden lassen. Dies ist u.a. auf Streuungen in den Kennwerten der in den Beschaltungen verwendeten Bauelemente, der Teilkondensatoren und der elektronischen Teilschaltelemente selbst, aber auch auf die parasitären Induktivitäten konkreter Schaltungsaufbauten zurückzuführen. So können bereits geringe Abweichungen in den Zünd- bzw. Sperrverzugszeiten einzelner elektronischer Teilschaltelemente langfristig zu einer unzulässig hohen Potentialverschiebung zwischen den Teilkondensatoren im Zwischenkreis führen. Zudem nehmen diese Verzugszeiten mit dem Laststrom zu. Hierdurch kann die maximal zulässige Sperr-bzw. Abschaltspannung einzelner elektronischer Teilschaltelemente überschritten werden. Doch auch Überspannungen im Zwischenkreis, z.B. aufgrund von Netzüberspannungen bzw. Energierückspeisung einer generatorischen Last in den Ausgang des Wechselrichters, können unzulässig hohe Spannungen an den Teilschaltelementen hervorrufen. Insbesondere bei GTO-Thyristoren müssen zu hohe statische und dynamische Spannungsbeanspruchungen während des Abschaltvorganges vermieden werden.

So müssen die Teilspannungen an den Teilkondensatoren mit zusätzlichen Maßnahmen ständig symmetriert und unter Umständen begrenzt werden. Eine bekannte Schaltung dieser Art ist in dem Buch "VEM-Handbuch Leistungselektronik", 3. Auflage, 1983, VEB Verlag Technik Berlin, auf Seite 52 in Bild 2.6.3 dargestellt und dort als "statische und dynamische Spannungssymmetrierung" bezeichnet. Dabei ist jedem Teilthyristor der Reihenschaltung eine TSE/RC-Beschaltung zur dynamischen und ein Widerstand zur statischen Spannungsaufteilung parallel geschaltet. Die Anwendung dieses Schaltungsprinzips auf Wechselrichter entsprechend der Figur 1 hat aber einen ständigen Stromfluß über die Symmetriervorrichtung und somit große Verluste zur Folge. Ferner ist in der Regel dennoch ein zusätzlicher zu- und abschaltbarer, unter Umständen niederohmiger Bremswiderstand im Umrichterzwischenkreis erforderlich, um Ströme abzuleiten, die von einer generatorischen Last in den Wechselrichterausgang eingespeist werden. Da wegen der hohen Zwischenkreisspannung auch das Schaltelement dieses "Bremsstellers" aus Teilschaltelementen mit zusätzlicher Spannungsaufteilung ausgeführt werden müßte, würde sich dabei ein hoher Bauteileaufwand ergeben.

Der Erfindung liegt somit die Aufgabe zugrunde, auf einfache und verlustarme Weise die Teilspannungen für die Teilschaltelemente in den Zweigen eines Umrichters mit hoher Zwischenkreisspannung zu symmetrieren, und damit gleichzeitig eventuelle Überspannungen im Zwischenkreis abzubauen. Eine auf diese Weise betriebene Symmetrier-und Bremsstellervorrichtung soll eine möglichst geringe Anzahl an Bauelementen benötigen und insbesondere von der übrigen Wechselrichterschaltung unabhängig betrieben werden können.

Die Aufgabe wird gelöst durch ein Verfahren, bei dem bei Überschreiten eines für ein elektronisches Teilschaltelement zulässigen Maximalwertes einer Teilspannung ein steuerbarer Entladezweig für den dazugehörigen Teilkondensator eingeschaltet und bei Unterschreiten eines Minimalwertes wieder abgeschaltet wird. Der zulässige Maximalwert einer Teilspannung wird dabei besonders vorteilhaft von der maximal zulässigen Schaltverlustleistung und der Minimalwert von der maximal zulässigen Sperrspannung des dazugehörigen elektronischen Teilschaltelementes bestimmt.

Bei einer Symmetrier- und Bremsstellervorrichtung zur Durchführung des erfindungsgemäßen Verfahrens sind eine der Anzahl der elektronischen Teilschaltelemente pro Zweig einer Phase eines Hochspannungsumrichters mit Spannungszwischenkreis entsprechenden Anzahl von Teilkondensatoren in Reihe angeordnet und den Teilschaltelementen parallel geschaltet. Dabei dient bevorzugt eine Reihenschaltung aus je einem elektronischen Hilfsschaltelement und einem Bremswiderstand parallel zu jedem Teilkondensator als ein steuerbarer Entladezweig.

Es ist besonders vorteilhaft, wenn abschaltbare Thyristoren (GTO-Thyristoren) als elektronische Hilfs- und/oder Teilschaltelemente verwendet werden.

Eine besonders vorteilhafte Steuervorrichtung für eine Symmetrier- und Bremsstellervorrichtung besteht parallel zu jedem steuerbaren Entladezweig aus einer ersten Referenzspannungsquelle zur Vorgabe des zulässigen Maximalwertes der Teilspannung eines Teilkondensators aus einer der Anzahl der elektronischen Teilschaltelemente pro Zweig einer Phase eines Hochspannungsumrichters mit Spannungszwischenkreis entsprechenden Anzahl von in Reihe angeordneten und den Teilschaltelementen parallelgeschalteten Teilkondensatoren. Ferner enthält sie eine zweite Referenzspannungsquelle zur Vorgabe des Minimalwertes der Teilspannung und einen Komparator mit Hysterese, bei dem die Werte der ersten und zweiten Referenzspannungsquelle als oberer bzw. unterer Schaltgrenzwert dienen. Ferner enthält sie einen Treiber, der das Ausgangssignal des Komparators an den Steuereingang des elektronischen Hilfsschaltelementes legt, welches in einem steuerbaren Entladezweig parallel zum jeweiligen Teilkondensator vorhanden ist, und einen Spannungsteiler für die Teilspannung zur Ansteuerung des Komparators. Bevorzugt wird eine Stromversorgung für die Referenzspannungsquellen, den Komparator und den Treiber von der Teilspannung des jeweiligen Teilkondensators selbst gespeist.

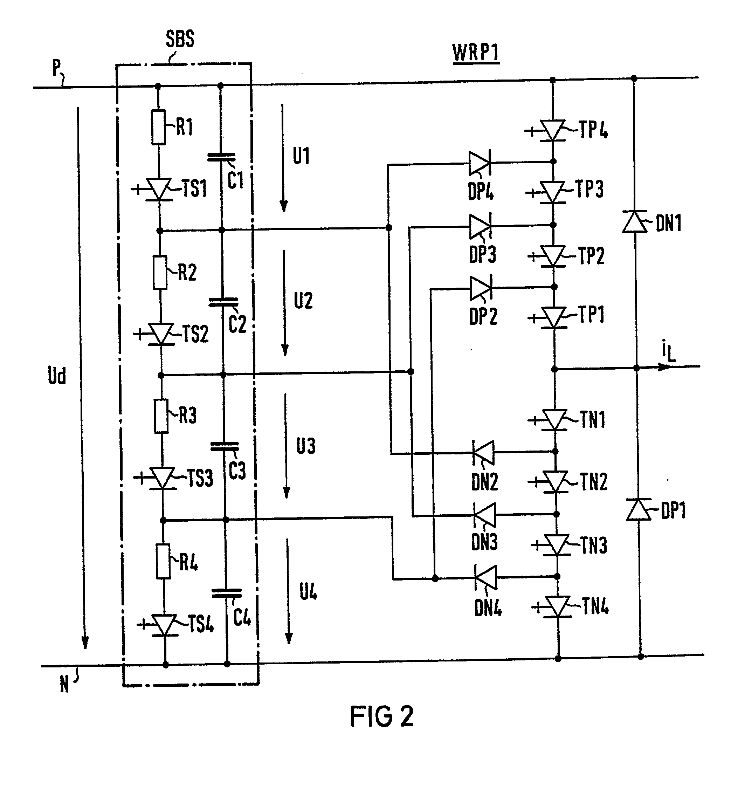

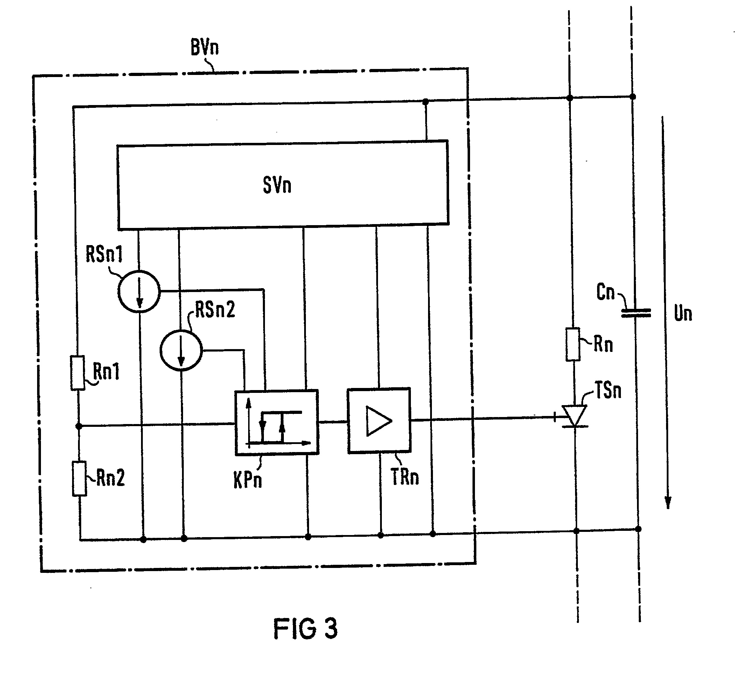

Anhand der bereits angeführten Figuren 2 und 3 wird die Erfindung nachfolgend näher erläutert.

Entsprechend dem Ausführungsbeispiel der Figur 2 besteht eine nach dem erfindungsgemäßen Verfahren betriebene Symmetrier- und Bremsstellervorrichtung SBS bevorzugt aus steuerbaren Entladezweigen mit je einem Bremswiderstand R1 ... R4 und einem Hilfsschaltelement TS1 ... TS4 parallel zu den Teilkondensatoren C1 ... C4. Die Entladezweige werden erfindungsgemäß dann zugeschaltet, wenn die entsprechende Teilspannung U1 ... U4 einen vorgegebenen Maximalwert überschritten hat. Dieser wird so groß gewählt, daß er im Normalbetrieb nicht erreicht wird, bzw. so klein gewählt, daß die in den einzelnen Teilschaltelementen auftretende Schaltverlustleistung innerhalb eines zulässigen Grenzwertes bleibt. Durch die Einschaltung eines steuerbaren Entladezweiges wird ein zusätzlicher Stromkreis vom positiven Potential P der Zwischenkreisspannung Ud über den oder die "davor" an geordneten Teilkondensatoren, den jeweiligen Entladezweig, den oder die "danach" angeordneten Teilkondensatoren bis zum negativen Potential N geschlossen. Die Entladung eines Teilkondensators bewirkt somit gleichzeitig eine Aufladung aller übrigen Teilkondensatoren. Auf diese Weise können die Teilspannungen ständig schnell und mit minimalen ohmschen Verlusten symmetriert werden.

Wird durch eine generatorische Last die Energieflußrichtung am Ausgang des Wechselrichters umgekehrt, so steigt die Zwischenkreisspannung Ud stark an und die steuerbaren Entladezweige aller Teilkondensatoren werden zugeschaltet. Die Reihenschaltung aus allen Bremswiderständen R1 ... R4 wirkt in diesem Fall als "Bremssteller", und leitet den von der Last kommenden Strom ab.

Unterschreitet die Teilspannung am jeweiligen Teilkondensator am Ende des Entladevorganges einen vorgegebenen Minimalwert, so wird der Entladezweig über das entsprechende Hilfsschaltelement wieder abgeschaltet. Dieser Minimalwert wird möglichst groß gewählt, so daß durch die Entladung keine unnötig hohen Verluste entstehen. Bevorzugt liegt sein Wert in der Größenordnung der maximal zulässigen Sperrspannung der elektronischen Teilschaltelemente.

Wie im Ausführungsbeispiel der Figur 2 bereits dargestellt, ist es besonders vorteilhaft, wenn neben den elektronischen Teilschaltelementen eines jeden Zweiges jeder Phase des Wechselrichters auch die Hilfsschaltelemente der Entladezweige als GTO-Thyristoren ausgeführt sind. Grundsätzlich ist es auch denkbar, daß die steuerbaren Entladezweige bei Bedarf noch zusätzliche Bauelemente, z.B. Induktivitäten, enthalten. Mit deren Hilfe kann dem Entladevorgang ein dem jeweiligen Anwendungsfall angepaßter Zeitverlauf eingeprägt werden.

Es ist ein besonderer Vorteil der erfindungsgemäßen Symmetrierung der Teilspannungen an den Teilschaltelementen der Zweige eines Umrichters mit hoher Zwischenkreisspannung und der nach diesem Verfahren betriebenen vorteilhaften Symmetrier- und Bremsstellervorrichtung SBS gemäß Figur 2, daß hierfür nur eine geringe Anzahl an Bauelementen benötigt wird. Insbesondere ist deren Anzahl nicht größer als die, welche allein für bekannte Bremssteller benötigt wird. Ferner ist es besonders vorteilhaft, daß die erfindungsgemäße Symmetrier- und Bremsstellervorrichtung von der übrigen Wechselrichterschaltung unabhängig betrieben werden kann.

Ein Teil einer besonders geeigneten Steuervorrichtung dieser Art ist in Figur 3 dargestellt. Diese besteht aus identischen Modulen BVn. Jedem Teilkondensator Cn und dessen steuerbarem Entladezweig aus dem Bremswiderstand Rn und dem Hilfsschaltelement TSn ist ein solches Modul zugeordnet, welches bevorzugt ausschließlich von der jeweiligen Teilspannung Un selbst gespeist wird. Einem Komparator mit Hysterese KPn wird dabei über einen Spannungsteiler Rn1, Rn2 die Teilspannung Un am Eingang eingeprägt. Dieser steuert über einen Treiber TRn schließlich das Hilfsschaltelement TSn an dessen Steuereingang an. Eine bevorzugt modulinterne und allein von der Teilspannung Un getriebene Stromversorgung SVn speist dabei neben dem Komparator KPn und dem Treiber TRn auch zwei Referenzspannungsquellen RSn1 und RSn2, die den jeweils zulässigen Maximal- und Minimalwert der Teilspannung Un dem Komparator KPn als oberen bzw. unteren Schaltgrenzwert vorgeben.

## Patentansprüche

1. Verfahren zur verlustarmen Symmetrierung von Teilspannungen (U1 ... U4) an in Reihe angeordneten elektronischen Teilschaltelementen (TP1 ... TP4 und TN1 ... TN4, ...) in den Zweigpaaren der Phasen eines Hochspannungsumrichters mit Spannungszwischenkreis und zum Abbau von Überspannungen im Zwischenkreis, wobei die Teilspannungen (U1 ... U4)·durch eine der Anzahl der Teilschaltelemente pro Zweig entsprechenden Anzahl von in Reihe angeordneten und den Teilschaltelementen parallel geschalteten Teilkondensatoren (C1 ... C4) aus der Zwischenkreisspannung (Ud) entnommen werden, dadurch gekennzeichnet, daß bei Überschreiten eines für ein elektronisches Teilschaltelement zulässigen Maximalwertes einer Teilspannung ein steuerbarer Entladezweig für den dazugehörigen Teilkondensator eingeschaltet und bei Unterschreiten eines Minimalwertes wieder abgeschaltet wird. (Fig. 2)

2. Verfahren nach Anspruch 1, dadurch gekennzeichnet, daß der zulässige Maximalwert einer Teilspannung von der maximal zulässigen Schaltverlustleistung und der Minimalwert von der maximal zulässigen Sperrspannung des dazugehörigen elektronischen Teilschaltelementes bestimmt wird.

3. Symmetrier- und Bremsstellervorrichtung (SBS) zur Durchführung des Verfahrens nach Anspruch 1 oder 2, mit einer der Anzahl der elektronischen Teilschaltelemente pro Zweig (TP1 ... TP4 bzw. TN1 ... TN4) einer Phase (WRP1, ...) eines Hochspannungsumrichters mit Spannungszwischenkreis entsprechenden Anzahl von in Reihe angeordneten und den Teilschaltelementen parallel geschal teten Teilkondensatoren (C1 ... C4), gekennzeichnet durch eine Reihenschaltung aus je einem elektronischen Hilfsschaltelement (TS1 ... TS4) und einem Bremswiderstand (R1 ... R4) parallel zu jedem Teilkondensator (C1 ... C4) als einen steuerbaren Entladezweig. (Fig. 2)

4. Vorrichtung nach Anspruch 3, gekennzeichnet durch abschaltbare Thyristoren (GTO-Thyristoren) als elektronische Hilfs- und/oder Teilschaltelemente.

5. Steuervorrichtung (..., BVn, ...) für eine Symmetrierund Bremsstellervorrichtung (SBS) nach Anspruch 3 oder 4, gekennzeichnet durch
   a) eine erste Referenzspannungsquelle (RSn1) zur Vorgabe des zulässigen Maximalwertes der Teilspannung (Un) eines Teilkondensators (Cn) aus einer der Anzahl der elektronischen Teilschaltelemente pro Zweig einer Phase eines Hochspannungsumrichters mit Spannungszwischenkreis entsprechenden Anzahl von in Reihe angeordneten und den Teilschaltelementen parallel geschalteten Teilkondensatoren,
   b) eine zweite Referenzspannungsquelle (RSn2) zur Vorgabe des Minimalwertes der Teilspannung (Un),
   c) einen Komparator mit Hysterese (KPn), bei dem die Werte der ersten und zweiten Referenzspannungsquelle (RSn1, RSn2) als oberer und unterer Schaltgrenzwert dienen,
   d) einen Treiber (TRn), der das Ausgangssignal des Komparators (KPn) an den Steuereingang eines elektronischen Hilfsschaltelementes (TSn) legt, welches in einem steuerbaren Entladezweig parallel zum jeweiligen Teilkondensator vorhanden ist, und
   e) einen Spannungsteiler (Rn1, Rn2) für die Teilspannung (Un) zur Ansteuerung des Komparators (KPn), parallel zu jedem steuerbaren Entladezweig (Rn, TSn). (Fig. 3).

6. Steuervorrichtung nach Anspruch 5, gekennzeichnet durch eine Stromversorgung (SVn) für die Referenzspannungsquellen, den Komparator und den Treiber, welche von der Teilspannung (Un) des jeweiligen Teilkondensators (Cn) selbst gespeist wird.

## Revendications

1. Procédé pour équilibrer, avec peu de pertes, des tensions parielles (U1 ... U4), dans des éléments électroniques pariels de coupure (TP1 ... TP4 et TN1 ... TN4, ...) montés en série dans les couples de branches d'phases d'un convertisseur statique de haute tension comportant un circuit intermédiaire de tension, et pour supprimer des surtensions dans le circuit intermédiaire, les tensions partielles (U1 ... U4) étant prélevées de la tension (Ud) du circuit intermédiaire, grâce à un nombre, correspondant au nombre des éléments partiels de coupure pour chaque branche, de condensateurs partiels (C1 ... C4) montés en serie et en parallèle sur les éléments partiels de coupure, caractérisé par le fait que lors du dépassement d'une valeur maximale, admissible pour un élément électronique partiel de coupure, d'une tension partielle, on met en circuit une branche de décharge commandable pour le condensateur partiel associé et on la met hors circuit à nouveau lorsque la tension partielle tombe au-dessous d'une valeur minimale. (Figure 2).

2. Procédé suivant la revendication 1, caractérisé par le fait qu'on détermine la valeur maximale admissible d'une tension partielle à partir de la pissance de coupure dissipée maximale admissible à la courpure et qu'on détermine la valeur minimale à partir de la tension de blocage maximale admissible de l'élément électronique partiel de coupure associé.

3. Dispositif (SBS) d'équilibrage et de régulation de freinage pour la mise en œuvre du procédé suivant la revendication 1 ou 2, comportant un nombre de condensateurs partiels (C1 ... C4) disposés en série et montés en parallèle avec les éléments partiels de coupure et qui correspond au nombre des éléments électroniques partiels de circuit (TP1 ... TP4 ou TN1 ... TN4) d'une phase (WRP, ... ) d'un convertisseur statique à haute tension comportant un circuit intermédiaire de tension, caractérisé par un circuit série formé d'un élément auxiliaire électronique de coupure (TS1 ... TS4) et d'une résistance de freinage (R1 ... R4), branchés en parallèle sur chaque condensateur partiel (C1 ... C4) en tant que branches de dérivation commandables. (Figure 2).

4. Dispositif suivant la revendication 3, caractérisé par des thyristors blocables (thyristors GTO) en tant qu'éléments électroniques auxiliaires et/ou partiels de coupure.

5. Dispositif de commande ( ... ,BVn, ... ) pour un dispositif (SBS) d'équilibrage et de régulation de freinage suivant la revendication 3 ou 4, caractérisé par

a) une première source de tension de référence (RSn1) servant à prédéterminer la valeur maximale admissible de la tension partielle (Un) d'un condensateur partiel (Cn) formée à partir d'un nombre de condensateur partiels montés en série et en parallèle sur les éléments partiels de circuit, et qui correspond au nombre des éléments électroniques partiels de coupure pour chaque branche dans une phase d'un convertisseur statique à haute tension comportant un circuit intermédiaire de tension,

b) une seconde source de tension de référence (RSn2) servant à prédéterminer la valeur minimale de la tension partielle (Un),

c) un comparateur possédant une hystérèse (KPn), dans lequel les valeurs des première et seconde sources de tension de référence (RSn1, RSn2) servent de valeurs limites supérieure et inférieure de commutation,

d) un étage d'attaque (TRn), qui applique le signal de commande du comparateur (KPn) à l'entrée de commande d'un élément électroniques auxiliaire de coupure (TSn), qui est présent dans une branche de décharge commandable, en parallèle sur le condensateur partiel respectif, et

e) un diviseur de tension (Rn1, Rn2) pour la tension partielle (Un) servant à commander le comparateur (KPn), en parallèle sur chaque branche de décharge commandable (Rn, Tsn). (Figure 3).

6. Dispositif de commande suivant la revendication 5, caractérisé par une alimentation en courant (SBn) pour les sources de tension de référence, pour le comparateur et pour l'étage d'attaque, laquelle alimentation en courant est elle-même alimentée par la tension partielle (Un) du condensateur partiel considéré (Cn).

**Claims**

1. Method for the low-loss balancing of partial voltages (U1 ... U4) at electronic partial switching elements (TP1 ... TP4 and TN1 ... TN4, ... ) arranged in series in the pairs of arms the phases of a high voltage converter with a voltage-link and for suppressing over-voltage in the link, wherein the partial voltages (U1 ... U4) are drawn from the link voltage (Ud) by a number of partial condensers (C1 ... C4), corresponding in number to the number of partial switching elements per arm, arranged in series and connected in parallel with the partial switching elements, characterised in that when a maximum permissible value of a partial voltage for an electronic partial switching element is exceeded a controllable discharge arm for the partial condenser belonging thereto is switched on and when the partial voltage falls below a minimum value is switched off again (Fig. 2).

2. Method according to claim 1, characterised in that the said maximum permissible value of a partial voltage is determined by the maximum permissible switching power loss and the said minimum value is determined by the maximum permissible cut-off voltage of the electronic partial switching element concerned.

3. A balancing and brake adjusting device (SBS) for executing the method according to claim 1 or 2, including a number of partial condensers (C1 ... C4), corresponding in number to the number of electronic partial switching elements per arm (TP1 ... TP4 or TN1 ... TN4) of a phase (WRP1, ... ) of a high voltage converter with a voltage-link, arranged in series and connected in parallel with the partial switching elements, characerised by respective series connections of one electronic auxiliary switching element (TS1 ... TS4) and a braking resistor (R1 ... R4) in parallel with the partial condensers (C1 ... C4) as respective controllable discharge arms (Fig. 2).

4. Device according to claim 3, characterised by gate turn-off thyristors (GTO-thyristors) as electronic auxiliary and/or partial switching elements.

5. Control device ( ... ,BVn ... ) for a claim 3 or 4, characterised by

a) a first reference voltage source (RSn1) for specifying the maximum permissible value of the partial voltage (Un) of a partial condenser (Cn) of a number of partial condensers, corresponding in number to the number of electronic partial switching elements per arm of a phase of a high voltage converter with a voltage-link, arranged in series and connected in parallel with the partial switching elements,

b) a second reference voltage source (RSn2) for specifying the minimum value of the partial voltage (Un),

c) a comparator with hysteresis (KPn), in which the values of the first and second reference voltage source (RSn1, RSn2) serve as upper and lower switch limiting values,

d) a driver (TRn), which connects the output signal of the comparator (KPn) to the control input of an electronic auxiliary switching element (TSn), which is present in a controllable discharge arm in parallel with the partial condenser concerned and

e) a voltage divider (Rn1, Rn2) for the partial voltage (Un) for driving the comparator (KPn), in parallel with each controllable discharge arm (Rn, TSn). (Fig. 3).

6. Control device according to claim 5, characterised by a power supply (SVn) for the reference voltage sources, the comparator and the driver, which power supply is itself supplied by the partial voltage (Un) of the partial condenser (Cn) concerned.

FIG 1

FIG 2

FIG 3